# EUROPEAN PATENT SPECIFICATION

(11) **EP 4 711 235 B1**
(45) Date of publication and mention of the grant of the patent: **02.09.2026**
(21) Application number: 25187019.2
(22) Date of filing: 02.07.2025
(51) Int. Cl.: B62B 9/10, A47D 13/02, B62B 7/06, B62B 7/14

(54) **A COLLAPSIBLE CARRYCOT AND A CHILD STROLLER COMPRISING THE SAME**
ZUSAMMENKLAPPBARE BABYTRAGETASCHE UND KINDERWAGEN DAMIT
BERCEAU PLIABLE ET POUSSETTE POUR ENFANT COMPRENANT CELUI-CI

(30) Priority: 14.09.2024 CN 202422261176 U; 16.03.2025 CN 202520453403 U
(43) Date of publication of application: 18.03.2026
(73) Proprietor: Zhejiang Jinhua Snowbaby Baby Items Manufacturing Co., Ltd., Lanxi Zhejiang Province 321100 (CN)
(72) Inventor: WANG, Pin Qi, Lanxi City (CN); MENG, Sheng Jun, Lanxi City (CN); HU, Chuan Xi, Lanxi City (CN)
(74) Representative: Prüfer & Partner mbB Patentanwälte · Rechtsanwälte

(56) References cited:
- EP-B1- 2 056 699
- CN-A- 116 714 658
- CN-U- 202 908 317
- CN-U- 203 693 076

## Description

### TECHNICAL FIELD

The present invention relates to a transportation device for children, and in particular to a collapsible carrycot and a child stroller comprising the same.

### BACKGROUND

Some child strollers have garnered extensive favor as they can be equipped with either a child seat or a carrycot to accommodate younger babies. Most of the carrycots fitted to the presently existing child strollers can only be folded by compressing the top and bottom frames from upside and downside, but cannot be folded in the longitudinal direction. In addition, the soft components such as the cloth cover have to be removed from the carrycot, so that subsequent manual operation may be subjected to the rods so as to remove support between the top frame and the bottom frame. This involves extremely cumbersome labor. Although a few carrycot products can be folded in the longitudinal direction, such folding is performed in a two-section folding manner, and the carrycot in a V-shape configuration after folding. As the rod bodies and the folding joint of the carrycot occupy certain space, the end of the rod bodies distal to the folding joint of the carrycot has a larger opening angle after folding. As a result, a certain space will still be occupied. On the other hand, forced compression may cause damage to the cloth cover soft component at the joint. In this context, EP 2 056 699 B1 relates to a baby carrycot, with a floor and a wall rising from the floor around the entire perimeter of the wall, in which the floor has two floor surface elements of approximately the same size, which can move from an active position that determine a common floor surface and a folded position for storage. Joining elements rise from both floor surface elements to which two U-shaped frame elements at least approximately of equal size are connected, which can be adjusted around a pivoting axis between a folded storage position and an active position in which they comprise in the upper edge of the carrycot. Both joining elements can be adjusted between an extended position that moves the frame elements away from the floor surface elements and a storage position, which brings the frame elements closer to the floor surface elements, and between the edge of the floor and both frame elements there is a flexible wall element that makes a wall for the carrycot, wherein the joining elements are in the two segments of the transversal edge separated from the two floor surface elements, and that the U-shaped frame elements are connected by a common lockable pivoting axis. CN 116 714 658 A relates to an infant lifting basket and an infant stroller provided with the same. The lifting basket comprises an upper frame, a lower frame, a mounting seat, a sliding seat and at least two linkage devices, wherein the sliding seat can be connected to the mounting seat in a manner of relatively moving up and down; the upper frame comprises two supporting pipes which are oppositely arranged, and the opposite sides of the two supporting pipes are pivoted to the upper side of the mounting seat; the lower frame comprises two bottom plates which are oppositely arranged, and the opposite sides of the two bottom plates are pivoted to the lower side of the mounting seat; each linkage device comprises a first linkage piece and a second linkage piece, the lower sides of the two first linkage pieces are pivoted to the sliding seat, and the upper sides of the two first linkage pieces are pivoted to the two supporting pipes respectively; the lower sides of the two second linkage pieces are pivoted to the two bottom plates respectively, and the upper sides of the two second linkage pieces are pivoted to the supporting pipes on the corresponding sides respectively. CN 203 693 076 U relates to a foldable sleeping basket, comprising two brackets, two bottom rods and two enclosure rods which respectively takes the shape of a semi-frame, bottom rod connecting rods, enclosure rod connecting rods and locking mechanisms, wherein two ends of the bottom rods and the enclosure rods are all rotationally connected with the two brackets, the two bottom rods and the two enclosure rod are respectively positioned on two sides of the brackets, the locking mechanism comprises a first locking piece matched with the bracket in a sliding manner and a second locking piece arranged on the bracket, one end of the bottom rod connecting rod is rotationally connected with the bottom rod and the other end is rotationally connected with the first locking piece, and one end of the enclosure rod connecting rod is rotationally connected with the enclosure rod and the other end is rotationally connected with the first locking piece. CN 202 908 317 U relates to an infant sleeping basket and a stroller provided with the infant sleeping basket. The sleeping basket frame comprises a base frame, a front side frame arranged on the front side portion of the base frame, a back side frame arranged on the back side portion of the base frame, and a synchronous folding mechanism enabling the front side frame and the back side frame to be synchronously closed up or synchronously apart relative to the base frame. The front side frame comprises a front bottom frame, a front wall frame and a front connecting rod. The back side frame comprises a back bottom frame, a back wall frame and a back connecting rod. The front side frame and the back side frame respectively form a four-bar mechanism with the base frame.

### SUMMARY

The present invention thus provides a collapsible carrycot and a child stroller comprising the same which aims to solve the problem in the prior art that when the carrycot is folded, the end of the carrycot rod bodies distal to the folding joint has a large opening angle, which still occupies certain space, and forced compression may cause damage to the cloth cover soft component at the joint.

The above technical problem is solved as defined by the claims.

A collapsible carrycot comprising an upper frame, a lower frame and a collapsible assembly, wherein the upper frame comprises a first upper frame body, a second upper frame body and a first foldable part and/or bendable part , the first upper frame body and the second upper frame body are connected via the first foldable part and/or bendable part , and each of the first upper frame body and the second upper frame body is separately foldable toward each other around the connection points thereof to the first foldable part and/or bendable part as the rotation points; the lower frame comprises a first lower frame body, a second lower frame body and a third lower frame body, the first lower frame body is rotatably connected to one end of the third lower frame body, the second lower frame body is rotatably connected to the other end of the third lower frame body, and each of the first lower frame body and the second lower frame body is separately foldable toward each other around the connection points thereof to the third lower frame body as the rotation points; wherein the collapsible assembly includes a first collapsible part between the first upper frame body and the first lower frame body, and a second collapsible part between the second upper frame body and the second lower frame body, and when the first upper frame body and the second upper frame body are folded toward each other, the first lower frame body and the second lower frame body are driven to be folded toward each other by the first collapsible part and the second collapsible part.

**In** some embodiments, the first upper frame body and the second upper frame body are connected via the first foldable part and/or bendable part , and can be separately folded upward around the connection points thereof to the first foldable part and/or bendable part as the rotation points. The first lower frame body and the second lower frame body can also be separately foldable toward each other around the connection points thereof to the third lower frame body as the rotation points. **In** some embodiments, the first collapsible part is disposed between the first upper frame body and the first lower frame body, and the second collapsible part is disposed between the second upper frame body and the second lower frame body. When the first upper frame body is folded upward around a rotation point which is the connection point to the first foldable part and/or bendable part , the first lower frame body is driven, by the first collapsible part, to be folded upward around a rotation point which is at the connection point to the third lower frame body. In some embodiments, when the second upper frame body is folded upward, the second lower frame body will also be driven to be folded upward, so as to reduce the storage space occupied by the carrycot. When the carrycot is to be unfolded for use, the first and second upper frame bodies are pulled apart which will also drive the first and second lower frame bodies to be unfolded. Since the third lower frame body is disposed between the first lower frame body and the second lower frame body, the lower frame is in a three-section-configuration after being folded. As a result, the third lower frame body will provide storage space between the first lower frame body and the second lower frame body in the folded state. On one hand, when folded, the first lower frame body, the second lower frame body and the third lower frame body are arranged in a U-shape configuration, which occupies less space than the two-section and V-shaped frame. On the other hand, the canopy and the cloth cover soft components are less likely to be damaged by the compression and the flatness after folding can be improved.

In some embodiments, the collapsible carrycot further includes a locking mechanism device, which is used to lock the first foldable part and/or bendable part such that the first upper frame body and the second upper frame body, and the first lower frame body and the second lower frame body cannot be folded. In some embodiments, the collapsible carrycot comprises a folded state and an unfolded state. The locking mechanism device is in the locking state when the collapsible carrycot is in the unfolded state.

In some embodiments, when the carrycot is unfolded for use, the locking mechanism device locks the first foldable part and/or bendable part , so that the first and second upper frame bodies are unable to be folded. Since the first lower frame body and the second lower frame body are linked with the first upper frame body and the second upper frame body through the first collapsible part and the second collapsible part, respectively, when the first upper frame body and the second upper frame body cannot be folded, the first lower frame body and the second lower frame body cannot be folded, either. The above indicated structure is safer and more stable as compared with the structure which maintains the use state of the carrycot by using the fastening of the rotation point itself.

In some embodiments, the upper frame or the lower frame is provided with an unlocking mechanism device which can unlock the locking mechanism device.

The upper frame or the lower frame is provided with the unlocking mechanism device, and the operation thereof is more convenient and simpler as compared with the case where the locking mechanism devices on both sides need to be manually unlocked, or even the cloth cover soft component on the carrycot need to be removed before the operation to the first and second collapsible parts can be conducted.

According to the present invention, the first collapsible part includes a first connecting rod and a first supporting rod. One end of the first connecting rod is rotatably connected to the first upper frame body, and the other end of the first connecting rod is rotatably connected to the first lower frame body. One end of the first supporting rod is rotatably connected to the first upper frame body, and the other end of the first supporting rod is fixedly connected to the third lower frame body.

In some embodiments, the second collapsible part includes a second connecting rod. One end of the second connecting rod is rotatably connected to the second upper frame body, and the other end of the second connecting rod is rotatably connected to the second lower frame body.

In some embodiments, the position where first connecting rod is rotatably connected to the first upper frame body is in a direction where the position for rotatably connecting the first supporting rod to the first upper frame body is distal to the first foldable part and/or bendable part . In some embodiments, the position where first connecting rod is rotatably connected to the first lower frame body is in a direction where the position for fixedly connecting the first supporting rod to the third lower frame body is distal to the third lower frame body. With the above configurations, the first support rod, the first connecting rod, and the first upper frame body can be more compact when folded, and the structure is simple and reliable. In some embodiments, the position where first connecting rod is rotatably connected to the first upper frame body is in a direction where the position for rotatably connecting the first connecting rod to the first lower frame body is distal to the first foldable part and/or bendable part and the third lower frame body.

In some embodiments, the first supporting rod is configured such that it does not deform during the folding of the collapsible carrycot. In some embodiments, the first supporting rod is configured such that it does not slide relative to the first upper frame body. In some embodiments, the first connecting rod is configured such that it does not deform during folding or unfolding. In some embodiments, the first connecting rod is configured such that it does not slide relative to the first upper frame body and/or the first lower frame body. By "not deforming" or "not deform", it means that a structure itself does not deform, especially including that the structure itself does not produce multiple sections of folding, or extension or retraction. In this way, the folding of the collapsible carrycot is achieved merely by the rotation between parts, which is simple and robust.

In some embodiments, the lower frame is consisted of the first lower frame body, the second lower frame body and the third lower frame body.

In some embodiments, the first supporting rod is fixedly connected to the third lower frame body. Under the folded state, the tilting degrees of the first upper frame body, the second upper frame body, the first lower frame body and the second lower frame body relative to the third lower frame body are in consistent with the tilting degree of the first supporting rod relative to the third lower frame body such that the carrycot can be tilted toward one side to fit the stroller frame, thereby facilitating the folding of the entire stroller. In addition, in the case where the third lower frame body is disposed on the frame of the child stroller, when the second upper frame body is folded upward, a force is applied to the first foldable part and/or bendable part to make it move downward. The downward movement of the first foldable part and/or bendable part will drive the other end of the first upper frame body to fold upward, as the position of the rotation point of the first supporting rod and the first upper frame body is fixed. As a result, only one hand is needed to fold the second upper frame body and cause the carrycot to be folded as a whole. The first collapsible part is further provided with a first connecting rod so that they connect to the upper frame and the lower frame at discrete positions to achieve an even distribution of the force, and thus providing a structure which is more stable and reliable and unlikely to deform. This embodiment has a simple structure, can be manufactured at a low cost and is not prone to malfunctions during use.

In some embodiments, the first collapsible part includes a first connecting rod and a first supporting rod. One end of the first supporting rod is rotatably connected to the first upper frame body, and the other end of the first supporting rod is rotatably connected to the third lower frame body. The first connecting rod comprises a first sub-rod, a second sub-rod, and a third sub-rod. The intermediate part of the third sub-rod is rotatably connected to the intermediate part of the first supporting rod. One end of the third sub-rod is rotatably connected to one end of the first sub-rod, and the other end of the third sub-rod is rotatably connected to one end of the second sub-rod. The other end of the first sub-rod is rotatably connected to a position of the first upper frame body proximal to the first foldable part and/or bendable part . The other end of the second sub-rod is rotatably connected to a position of the first lower frame body distal to the third lower frame body. The second collapsible part includes a second connecting rod. One end of the second connecting rod is rotatably connected to the second upper frame body, and the other end of the second connecting rod is rotatably connected to the second lower frame body.

In these embodiments, the upward folding of the second upper frame body will drive the second lower frame body to be folded upward. Meanwhile, the second upper frame body drives the first sub-rod to move downward through a downward force applied by the first foldable part and/or bendable part to the end of the first upper frame proximal to the first foldable part and/or bendable part . In addition, the intermediate part of the third sub-rod is rotatably connected to the intermediate part of the first supporting rod. The downward movement of the first sub-rod drives the third sub-rod to rotate around the connection point between the third sub-rod and the first supporting rod. Furthermore, as the third sub-rod is rotatably connected to the second sub-rod, the first sub-rod is rotatably connected to the first upper frame body, and the second sub-rod is rotatably connected to the first lower frame body, the rotation of the third sub-rod will pull the second sub-rod, and drive the first lower frame body folding upward. Furthermore, the first supporting rod is fixedly connected to the third lower frame body. As a result, in the folded state, the tilting degree of the first upper frame body, the second upper frame body, the first lower frame body and the second lower frame body is in consistent with the tilting degree of the first supporting rod such that the carrycot can be tilted toward one side to fit the stroller frame, thereby facilitating the folding of the entire stroller.

In some embodiments, the second collapsible part further includes a third connecting rod. One end of the third connecting rod is rotatably connected to the second upper frame body, and the other end of the third connecting rod is rotatably connected to the third lower frame body.

In these embodiments, the other end of the third connecting rod is rotatably connected to the third lower frame body. The positions where the second collapsible part connects to the upper frame and the lower frame are discrete so as to achieve an even distribution of the force, thus the structure is more stable and reliable, and is unlikely to deform.

In some embodiments, the first collapsible part includes a first connecting rod. One end of the first connecting rod is rotatably connected to the first upper frame body, and the other end of the first connecting rod is rotatably connected to the first lower frame body.

In these embodiments, the first collapsible part is linked to the folding motion of the first upper frame body and the first lower frame body through the first connecting rod disposed between the first upper frame body and the first lower frame body, thus achieving a simple structure and low manufacturing cost.

In some embodiments, the first collapsible part further includes a second connecting rod. One end of the second connecting rod is rotatably connected to the first upper frame body, and the other end of the second connecting rod is rotatably connected to the connection point between the first lower frame body and the third lower frame body.

In these embodiments, the other end of the second connecting rod is rotatably connected to the connection point between the first lower frame body and the third lower frame body. The first collapsible part connects to the upper frame and the lower frame at discrete positions so as to achieve an even distribution of force, thus achieving a stable structure and reliable, and is unlikely to deform.

In some embodiments, the second collapsible part and the first collapsible part are symmetrically arranged.

In these embodiments, the second collapsible part and the first collapsible part are symmetrically arranged. Therefore, the carrycot has a simple structure and low manufacturing cost.

In some embodiments, the first collapsible part includes a first connecting rod and a second connecting rod. One end of the second connecting rod is rotatably connected to the first upper frame body, and the other end of the second connecting rod is rotatably connected to the connection point between the first lower frame body and the third lower frame body. The first connecting rod comprises a first sub-rod, a second sub-rod, and a third sub-rod. The intermediate part of the third sub-rod is rotatably connected to the intermediate part of the second connecting rod. One end of the third sub-rod is rotatably connected to one end of the first sub-rod, and the other end of the third sub-rod is rotatably connected to one end of the second sub-rod. The other end of the first sub-rod is rotatably connected to a position of the first upper frame body proximal to the first foldable part and/or bendable part . The other end of the second sub-rod is rotatably connected to a position of the first lower frame body distal to the third lower frame body.

In these embodiments, both ends of the second connecting rod are rotatably connected to the first upper frame body, and the connection point between the first lower frame body and the third lower frame body. The upward folding of the first upper frame body drives rotation of the second connecting rod around a rotation point which is the connection point between the first lower frame body and the third lower frame body. In addition, the intermediate part of the third sub-rod is rotatably connected to the intermediate part of the second connecting rod. Rotation of the second connecting rod drives the third sub-rod to rotate around the connection point between the third sub-rod and the second connecting rod. Furthermore, as the third sub-rod is rotatably connected to the first sub-rod and the second sub-rod, the first sub-rod is rotatably connected to the first upper frame body, and the second sub-rod is rotatably connected to the first lower frame body, the rotation of the third sub-rod will pull the second sub-rod and thus render the first lower frame body fold upward. In the above indicated structure, the first collapsible part is in a cross X shape and its force-bearing connection positions with the first upper frame body and the first lower frame body are uniformly dispersed. Therefore, the structure is more stable and reliable.

In some embodiments, the second collapsible part and the first collapsible part are symmetrically arranged.

The second collapsible part and the first collapsible part are symmetrically arranged. The carrycot has a simple structure and low manufacturing cost.

A child stroller comprising any one of the above collapsible carrycot. In some embodiments, the first upper frame body and the second upper frame body of the carrycot of the child stroller are connected by the first foldable part and/or bendable part , and can be separately folded upward around the connection points thereof to the first foldable part and/or bendable part as the rotation points. Each of the first lower frame body and the second lower frame body can also be foldable toward each other around the connection points thereof to the third lower frame body as the rotation points. In addition, the first collapsible part is disposed between the first upper frame body and the first lower frame body, and the second collapsible part is disposed between the second upper frame body and the second lower frame body. When the first upper frame body is folded upward around a rotation point which is the connection point to the first foldable part and/or bendable part , the first collapsible part will drive the first lower frame body to be folded upward around a rotation point which is the connection point to the third lower frame body. Similarly, when the second upper frame body is folded upward, the second lower frame body will also be driven to fold upward so as to reduce the storage space occupied by the carrycot. When the carrycot needs to be unfolded for use, the first and second upper frame bodies are pulled, which will also cause unfolding of the first and second lower frame bodies. Since the third lower frame body is disposed between the first lower frame body and the second lower frame body, the lower frame is in a three-section-configuration when it has been folded. As a result, the third lower frame body will provide the storage space between the first lower frame body and the second lower frame body in the folded state. On one hand, after folding, the first lower frame body, the second lower frame body and the third lower frame body are arranged in a U-shape configuration, which occupies smaller space than the two-section V-shaped frame. On the other hand, the canopy and the cloth cover soft component are unlikely to be damaged by compression and their flatness after folding are improved.

### DESCRIPTION OF THE DRAWINGS

FIG. 1 is a structural schematic view of a carrycot according to Example 1 of the present application.
FIG. 2 is another structural schematic view of the carrycot according to Example 1 of the present application.
FIG. 3 is a schematic view of the carrycot which is being folded according to Example 1 of the present application.
FIG. 4 is a schematic view of the carrycot which has been folded according to Example 1 of the present application.
FIG. 5 is a structural schematic view of a child stroller according to Example 1 of the present application.
FIG. 6 is another structural schematic view of the child stroller according to Example 1 of the present application.
FIG. 7 is a structural schematic view of a carrycot according to Example 2 of the present application.
FIG. 8 is another structural schematic view of the carrycot according to Example 2 of the present application.
FIG. 9 is a schematic view of the carrycot which is being folded according to Example 2 of the present application.
FIG. 10 is a schematic view of the carrycot which has been folded according to Example 2 of the present application.
FIG. 11 is a structural schematic view of a child stroller according to Example 2 of the present application.
FIG. 12 is another structural schematic view of the child stroller according to Example 2 of the present application.
FIG. 13 is a structural schematic view of a carrycot according to Example 3 of the present application.
FIG. 14 is another structural schematic view of the carrycot according to Example 3 of the present application.
FIG. 15 is a schematic view of the carrycot which is being folded according to Example 3 of the present application.
FIG. 16 is a structural schematic view of a carrycot according to Example 4 of the present application.
FIG. 17 is another structural schematic view of the carrycot according to Example 4 of the present application.
FIG. 18 is a schematic view of the carrycot which is being folded according to Example 4 of the present application.
FIG. 19 is a structural schematic view of a locking mechanism device of the present application.

### DESCRIPTION OF REFERENCE NUMERALS

the upper frame 1
the first upper frame body 11
the second upper frame body 12
the first foldable part and/or bendable part 13
the lower frame 2
the first lower frame body 21
the second lower frame body 22
the third lower frame body 23
the first collapsible part 31
the first connecting rod 311
the first sub-rod 3111
the second sub-rod 3112
the third sub-rod 3113
the first supporting rod 312
the second collapsible part 32
the second connecting rod 321
the third connecting rod 322
the locking mechanism device 4
the unlocking mechanism device 5

### DETAILED DESCRIPTION

The present invention will be described more clearly and completely with reference to the following preferred examples in conjunction with the accompanying drawings.

### Example 1

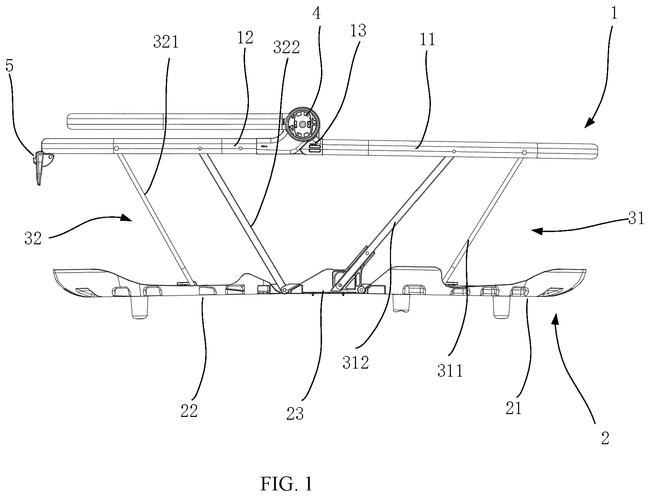

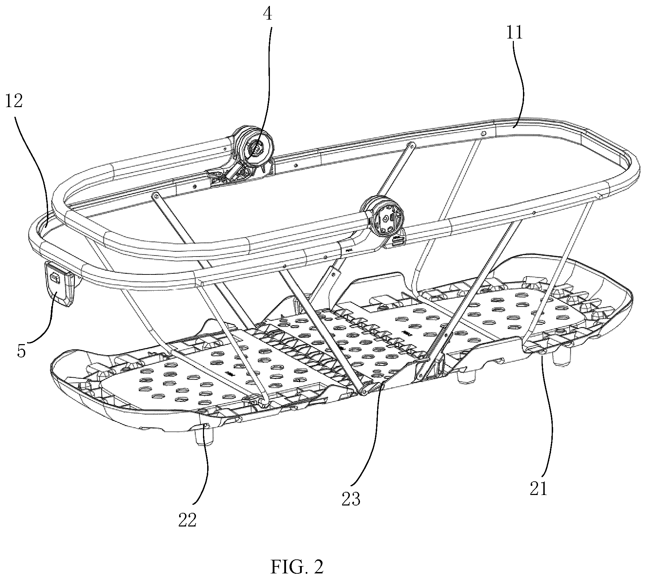

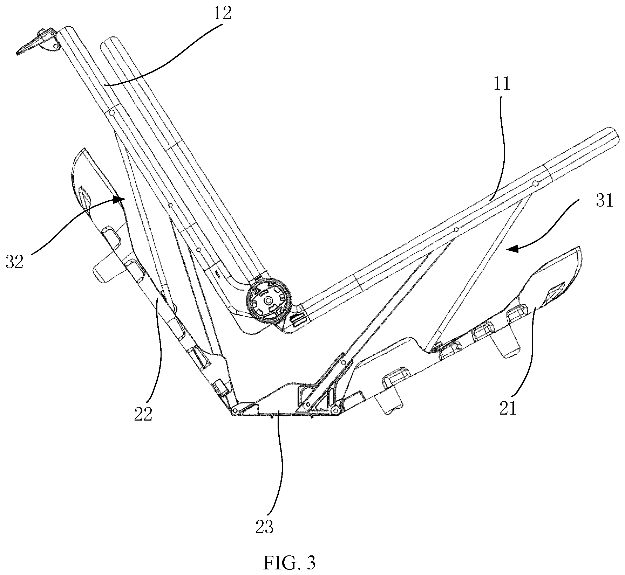

As shown in FIG. 1 to FIG. 4, this example of the present application provides a collapsible carrycot comprising an upper frame 1, a lower frame 2 and a collapsible assembly. The upper frame 1 comprises a first upper frame body 11, a second upper frame body 12 and a first foldable part and/or bendable part 13. The first upper frame body 11 and the second upper frame body 12 are connected via the first foldable part and/or bendable part 13. The first upper frame body 11 and the second upper frame body 12 may be separately foldable toward each other around the connection points thereof to the first foldable part and/or bendable part 13 as the rotation points. The lower frame 2 comprises a first lower frame body 21, a second lower frame body 22 and a third lower frame body 23. The first lower frame body 21 is rotatably connected to one end of the third lower frame body 23, and the second lower frame body 22 is rotatably connected to the other end of the third lower frame body 23. The first lower frame body 21 and the second lower frame body 22 may be separately foldable toward each other around the connection points thereof to the third lower frame body 23 as the rotation points. The collapsible assembly includes a first collapsible part 31 disposed between the first upper frame body 11 and the first lower frame body 21, and a second collapsible part 32 disposed between the second upper frame body 12 and the second lower frame body 22. When the first upper frame body 11 and the second upper frame body 12 are folded toward each other, the first collapsible part 31 and the second collapsible part 32 will drive the first lower frame body 21 and the second lower frame body 22 to be folded toward each other. The first collapsible part 31 includes a first connecting rod 311 and a first supporting rod 312. One end of the first supporting rod 312 is rotatably connected to the intermediate part of the first upper frame body 11, and the other end of the first supporting rod 312 is fixedly connected to the third lower frame body 23. One end of the first connecting rod 311 is rotatably connected to the first upper frame body 11, and the other end of the first connecting rod 311 is rotatably connected to the first lower frame body 21. The second collapsible part 32 includes a second connecting rod 321. One end of the second connecting rod 321 is rotatably connected to the intermediate part of the second upper frame body 12, and the other end of the second connecting rod 321 is rotatably connected to the second lower frame body 22.

In this example, the first upper frame body 11 and the second upper frame body 12 are connected via the first foldable part and/or bendable part 13, and they can be separately folded upward around the connection points thereof to the first foldable part and/or bendable part 13 as the rotation points. Besides, the first lower frame body 21 and the second lower frame body 22 can be separately foldable toward each other around the connection points thereof to the third lower frame body 23 as the rotation points. In addition, the first collapsible part 31 is disposed between the first upper frame body 11 and the first lower frame body 21, and the second collapsible part 32 is disposed between the second upper frame body 12 and the second lower frame body 22. When the first upper frame body 11 is folded upward around a rotation point which is the connection point to the first foldable part and/or bendable part 13, the first collapsible part 31 will drive the first lower frame body 21 to be folded upward around the rotation point which is the connection point to the third lower frame body 23. Similarly, when the second upper frame body 12 is folded upward, the second lower frame body 22 will also be driven to be folded upward, so as to reduce the storage space occupied by the carrycot. When the carrycot is to be unfolded for use, the first upper frame body 11 and the second upper frame body 12 are pulled, which will also drive the first lower frame body 21 and the second lower frame body 22 to be unfolded. Since the third lower frame body 23 is disposed between the first lower frame body 21 and the second lower frame body 22, the lower frame 2 is in a three section configuration after being folded. Of course, in other examples, the third lower frame body 23 itself may be in two sections or more such that the transition at the foldable part and/or bendable part is more fluent. The third lower frame body 23 will provide the storage space between the first lower frame body 21 and the second lower frame body 22 in the folded state. On one hand, after folding, the first lower frame body 21, the second lower frame body 22 and the third lower frame body 23 are arranged parallel in a U-shape configuration, which occupies smaller space than the frame in two-section V-shaped configuration. On the other hand, the canopy and the cloth cover soft component are unlikely to be damaged by compression and their flatness after folding is improved. Of course, in other examples, the third upper frame body may also be disposed between the first upper frame body 11 and the second upper frame body 12 to achieve better folding effect. Furthermore, the first supporting rod 312 is fixedly connected to the third lower frame body 23. As a result, in the folded state, the tilting degrees of the first upper frame body 11, the second upper frame body 12, the first lower frame body 21 and the second lower frame body 22 are in consistent with the tilting degree of the first supporting rod 312 such that the carrycot can be tilted toward one side to fit the stroller frame, thereby facilitating the folding of the entire stroller. The first collapsible part 31 is further provided with a first connecting rod 311 so that it is connected to the upper frame 1 and the lower frame 2 at discrete locations and achieve an even distribution of force, thus the structure is more stable and reliable, and is unlikely to deform. This technical solution comprises a simple structure, can be manufactured at a low cost and is not prone to malfunctions during use.

According to a preferred embodiment, the second collapsible part 32 further includes a third connecting rod 322. One end of the third connecting rod 322 is rotatably connected to the second upper frame body 12, and the other end of the third connecting rod 322 is rotatably connected to the connection point between the second lower frame body 22 and the third lower frame body 23.

In this example, the other end of the third connecting rod 322 is rotatably connected to the connection point between the second lower frame body 22 and the third lower frame body 23. The second collapsible part 32 connects to the upper frame 1 and the lower frame 2 at discrete locations to achieve an even distribution of force, thus and the structure is more stable and reliable, and is unlikely to deform.

As a preferable embodiment, the collapsible carrycot further includes a locking mechanism device 4 which is used to lock the first foldable part and/or bendable part 13 such that the first upper frame body 11 and the second upper frame body 12, the first lower frame body 21 and the second lower frame body 22 cannot be folded.

In this embodiment, when the carrycot is unfolded for use, the locking mechanism device 4 locks the first foldable part and/or bendable part 13, thus the first upper frame body 11 and second upper frame body 12 are unable to be folded. Since the first lower frame body 21 and the second lower frame body 22 are in linkage with the first upper frame body 11 and the second upper frame body 12 through the first collapsible part 31 and the second collapsible part 32, when the first upper frame body 11 and the second upper frame body 12 cannot be folded, the first lower frame body 21 and the second lower frame body 22 cannot be folded either. The above structure is safer and more stable as compared with the structure which maintains the use state of the carrycot by using the fasteness of the rotation point itself. Of course, in other examples, the third lower frame body 23 may also be provided with a locking mechanism device 4 to lock the third lower frame body 23. Alternatively, both the first foldable part and/or bendable part 13 and the third lower frame body 23 are provided with the locking mechanism devices 4, which will also achieve the above effect.

As a preferable embodiment, the upper frame 1 is provided with an unlocking mechanism device 5 which can unlock the locking mechanism device 4.

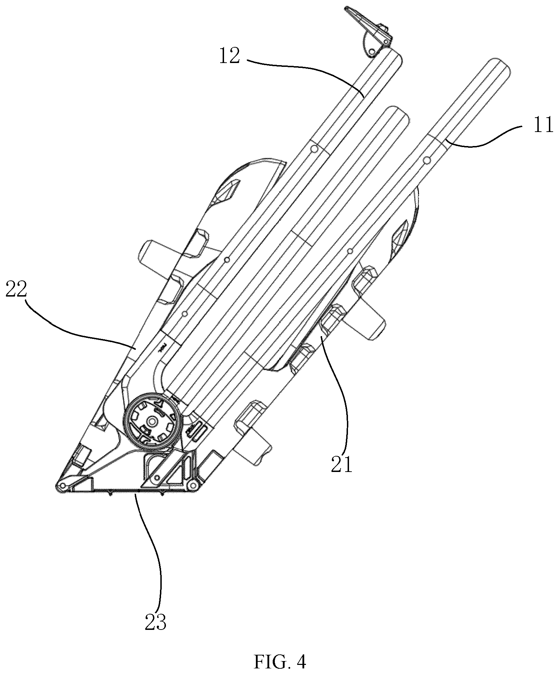

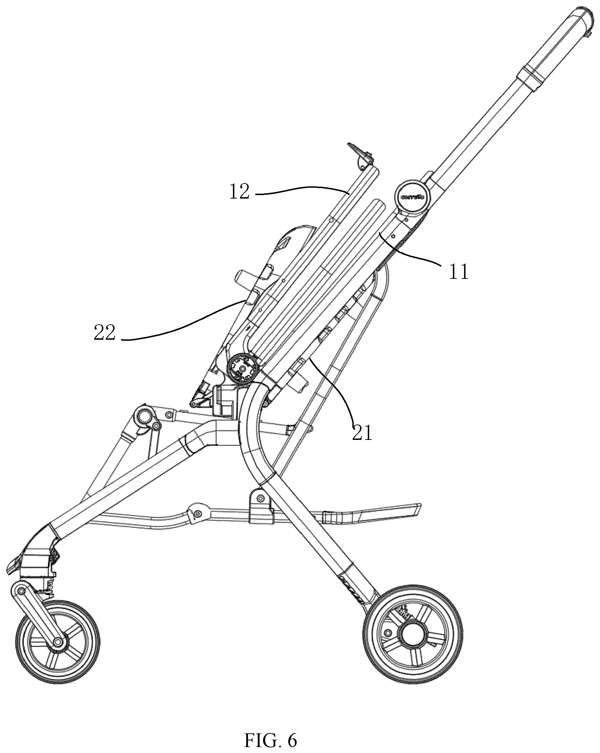

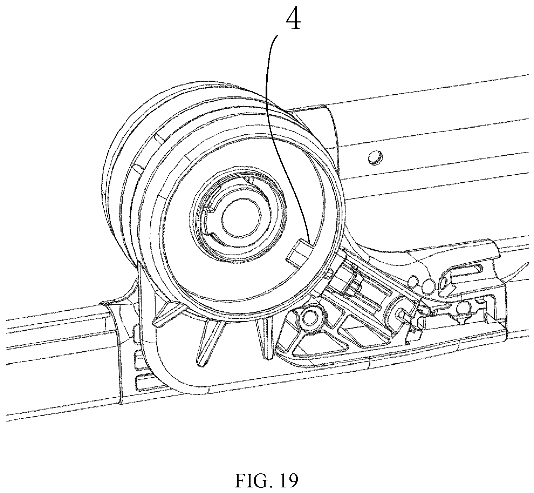

In this embodiment, the upper frame 1 is provided with the unlocking mechanism device 5 which unlocks the locking state of the locking mechanism device 4 via a pulling rope. As shown in FIG. 19, the locking mechanism device 4 can lock the first foldable part and/or bendable part 13 by using the means of a locking pin, a gear clamp, and the like. Meanwhile, as shown in FIGS. 4 and 6, when the first foldable part and/or bendable part 13 is in the folded state, the locking mechanism device 4 can also lock it to keep the entire carrycot in the folded state. Various designs of the locking mechanism device 4 and the unlocking mechanism device 5 are well known in the technical field, and no specific description or limitation is made here. The operation is more convenient and simpler as compared with the solution where the locking mechanism devices 4 on both sides have to be manually unlocked, or even the cloth cover soft component on the carrycot needs to be removed to operate the first collapsible part 31 and the second collapsible part 32.

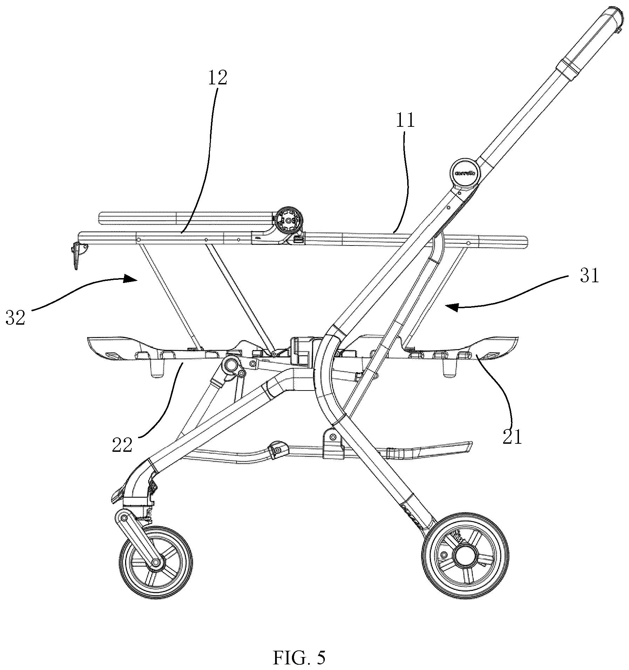

As shown in FIGS. 5 and 6, this example further provides a child stroller comprising the collapsible carrycot as described above, wherein the third lower frame 23 is removably arranged on the frame of the child stroller.

In the carrycot of the child stroller of this example, the first upper frame body 11 and the second upper frame body 12 are connected via the first foldable part and/or bendable part 13, and they can be separately folded upward around the connection points thereof to the first foldable part and/or bendable part 13 as rotation points. The first lower frame body 21 and the second lower frame body 22 can also be foldable toward each other around the connection points thereof to the third lower frame body 23 as the rotation points. In addition, the first collapsible part 31 is disposed between the first upper frame body 11 and the first lower frame body 21, and the second collapsible part 32 is disposed between the second upper frame body 12 and the second lower frame body 22. When the first upper frame body 11 is folded upward around a rotation point which is the connection point to the first foldable part and/or bendable part 13, the first collapsible part 31 will drive the first lower frame body 21 to be folded upward around a rotation point which is the connection point to the third lower frame body 23. Similarly, the upward folding of the second upper frame body 12 will drive the upward folding of the second lower frame body 22, so as to reduce the storage space occupied by the carrycot. When the carrycot is to be unfolded for use, the first upper frame body 11 and the second upper frame body 12 are pulled, which will also drive the first lower frame body 21 and the second lower frame body 22 to be unfolded. Since the third lower frame body 23 is disposed between the first lower frame body 21 and the second lower frame body 22, the lower frame 2 is in a three-section-configuration after being folded. Of course, in other examples, the third lower frame body 23 itself may be in two sections or more such that the transition at the foldable part and/or bendable part is more fluent. The third lower frame body 23 will provide storage space between the first lower frame body 21 and the second lower frame body 22 in the folded state. On one hand, after folding, the first lower frame body 21, the second lower frame body 22 and the third lower frame body 23 are parallel arranged in a U-shape configuration, which occupies smaller space than the two-section V-shaped frame. On the other hand, the canopy and the cloth cover soft components are unlikely to be damaged by compression and their flatness after folding can be improved. Of course, in other examples, the third upper frame body may also be provided between the first upper frame body 11 and the second upper frame body 12 to achieve better folding effect. Furthermore, the first supporting rod 312 is fixedly connected to the third lower frame body 23. As a result, in the folded state, the tilting degrees of the first upper frame body 11, the second upper frame body 12, the first lower frame body 21 and the second lower frame body 22 are in consistent with the tilting degree of the first supporting rod 312 such that the carrycot can be tilted toward one side to fit the stroller frame, thereby facilitating the folding of the entire stroller. In addition, when the second upper frame body 12 is folded upward, a force is applied to the first foldable part and/or bendable part 13 to make it move downward. As the position of the rotation point of the first supporting rod 312 and the first upper frame body 11 is fixed, the second upper frame body 12 can be folded by using merely one hand, and render the carrycot to be folded as a whole. The first collapsible part 31 is further provided with a first connecting rod 311 so that they are connected to the upper frame 1 and the lower frame 2 at discrete locations, thus achieving an even distribution of force, and the structure is more stable and reliable, and is unlikely to deform. This technical solution has a simple structure, can be manufactured at a low cost and is not prone to malfunctions during use.

### Example 2

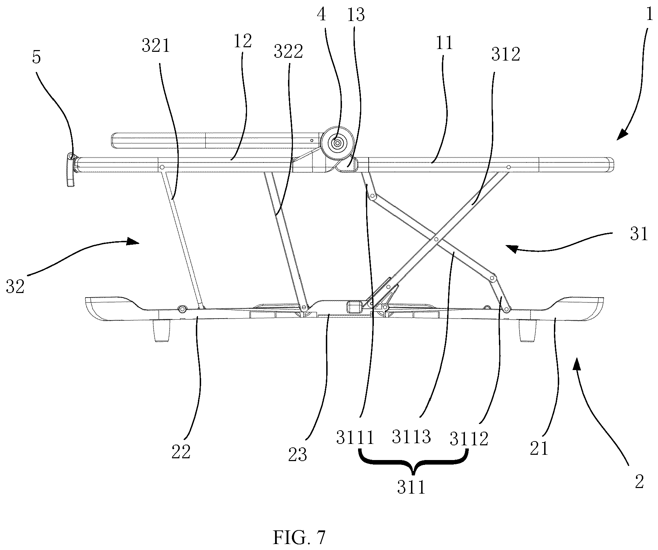

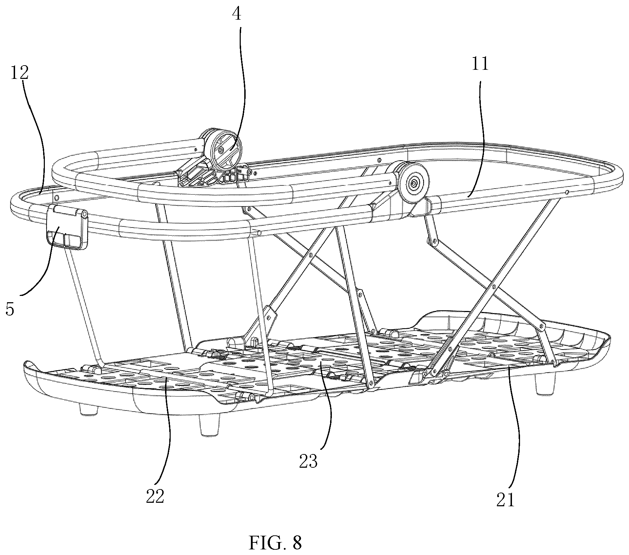

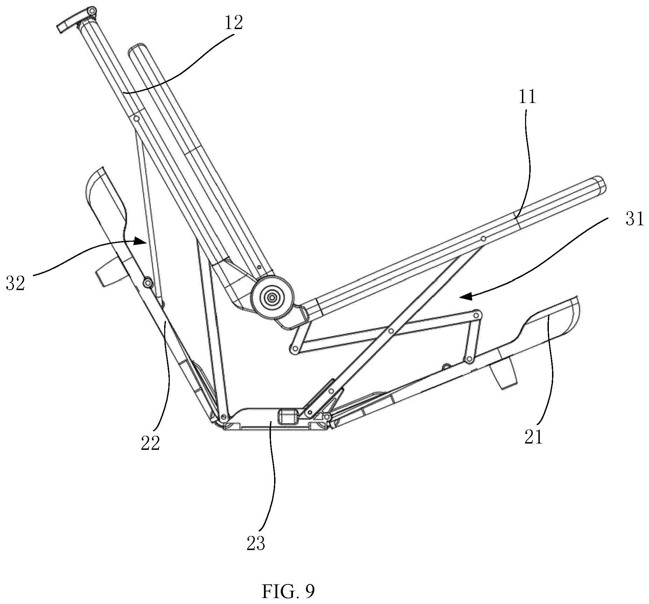

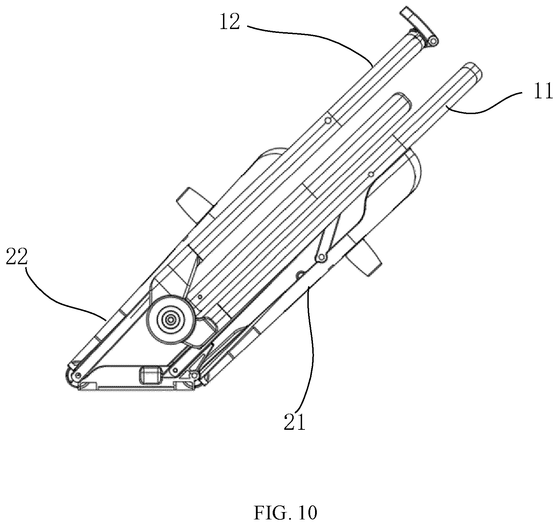

As shown in FIG. 7 to FIG. 10, Example 2 of the present application provides a collapsible carrycot comprising a first collapsible part 31 which includes a first connecting rod 311 and a first supporting rod 312. One end of the first supporting rod 312 is rotatably connected to the intermediate part of the first upper frame body 11, and the other end of the first supporting rod 312 is fixedly connected to the third lower frame body 23. As compared with Example 1, the first connecting rod 311 comprises a first sub-rod 3111, a second sub-rod 3112 and a third sub-rod 3113. The intermediate part of the third sub-rod 3113 is rotatably connected to the intermediate part of the first supporting rod 312. One end of the third sub-rod 3113 is rotatably connected to one end of the first sub-rod 3111. The other end of the third sub-rod 3113 is rotatably connected to one end of the second sub-rod 3112, and the other end of the first sub-rod 3111 is rotatably connected to a position of the first upper frame body 11 proximal to the first foldable part and/or bendable part 13. The other end of the second sub-rod 3112 is rotatably connected to a position of the first lower frame body 21 distal to the third lower frame body 23. The second collapsible part 32 includes a second connecting rod 321. One end of the second connecting rod 321 is rotatably connected to the intermediate part of the second upper frame body 12. The other end of the second connecting rod 321 is rotatably connected to the second lower frame body 22.

In this example, the first upper frame body 11 and the second upper frame body 12 are connected via the first foldable part and/or bendable part 13, and can be separately folded upward around the connection points thereof to the first foldable part and/or bendable part 13 as the rotation points. Besides, the first lower frame body 21 and the second lower frame body 22 can be foldable toward each other around the connection points thereof to the third lower frame body 23 as the rotation points. In addition, the first collapsible part 31 is disposed between the first upper frame body 11 and the first lower frame body 21, and the second collapsible part 32 is disposed between the second upper frame body 12 and the second lower frame body 22. The upward folding of the first upper frame body 11 will render the second lower frame body 22 to be folded upward. Meanwhile, the second upper frame body 12 drives the first sub-rod 3111 to move downward through a downward force applied by the first foldable part and/or bendable part 13 to the end of the first upper frame body 11 proximal to the first foldable part and/or bendable part 13. In addition, the intermediate part of the third sub-rod 3113 is rotatably connected to the intermediate part of the first supporting rod 312. The downward movement of the first sub-rod 3111 will drive the third sub-rod 3113 to rotate around the connection point between the third sub-rod 3113 and the first supporting rod 312. As the third sub-rod 3113 is rotatably connected to the second sub-rod 3112, the first sub-rod 3111 is rotatably connected to the first upper frame body 11, and the second sub-rod 3112 is rotatably connected to the first lower frame body 21, the rotation of the third sub-rod 3113 will pull the second sub-rod 3112 and render the upward folding of the first lower frame body 21. Furthermore, the first supporting rod 312 is fixedly connected to the third lower frame body 23. As a result, in the folded state, the tilting degrees of the first upper frame body 11, the second upper frame body 12, the first lower frame body 21 and the second lower frame body 22 are in consistent with the tilting degree of the first supporting rod 312 such that the carrycot can be tilted toward one side to fit the stroller frame, thereby facilitating the folding of the entire stroller.

As a preferred embodiment, the second collapsible part 32 further includes a third connecting rod 322. One end of the third connecting rod 322 is rotatably connected to the second upper frame body 12, and the other end of the third connecting rod 322 is rotatably connected to the connection point between the second lower frame body 22 and the third lower frame body 23.

In this example, the other end of the third connecting rod 322 is rotatably connected to the connection point between the second lower frame body 22 and the third lower frame body 23. The second collapsible part 32 connects to the upper frame 1 and the lower frame 2 at discrete locations to achieve an even distribution of force, and the structure is more stable and reliable, and is unlikely to deform.

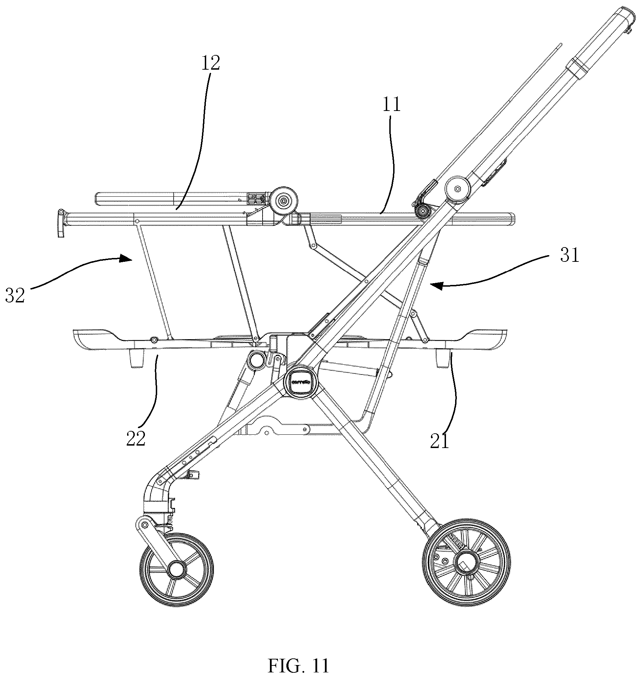

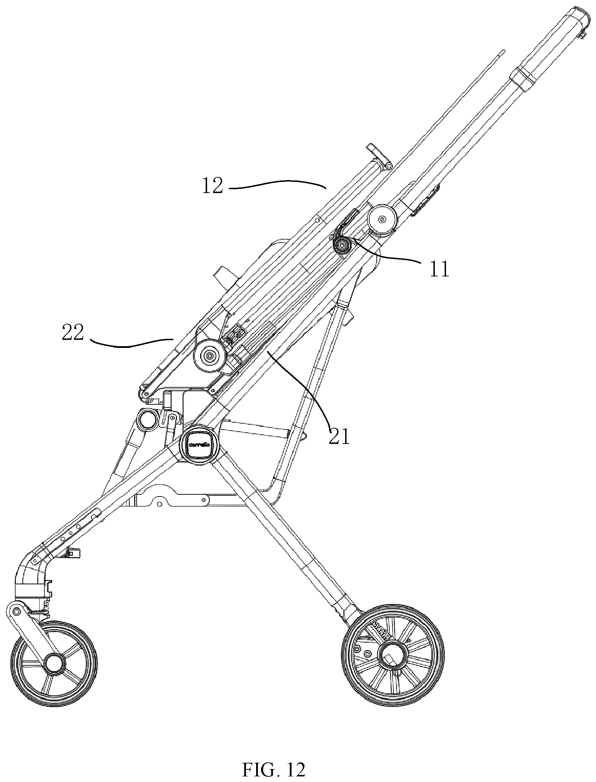

As shown in FIGS. 11 and 12, this example further provides a child stroller comprising the collapsible carrycot as described above.

In the carrycot of the child stroller of this example, the first upper frame body 11 and the second upper frame body 12 are connected via the first foldable part and/or bendable part 13, and can be separately folded upward around the connection points thereof to the first foldable part and/or bendable part 13 as the rotation points. Besides, the first lower frame body 21 and the second lower frame body 22 can be foldable toward each other around the connections thereof to the third lower frame body 23 as rotation points. In addition, the first collapsible part 31 is disposed between the first upper frame body 11 and the first lower frame body 21, and the second collapsible part 32 is disposed between the second upper frame body 12 and the second lower frame body 22. When the first upper frame body 11 is folded upward around a rotation point which is the connection point to the first foldable part and/or bendable part 13, the first collapsible part 31 will drive the first lower frame body 21 to be folded upward around the connection point thereof to the third lower frame body 23 as the rotation point. Similarly, the upward folding of the second upper frame body 12 will drive the second lower frame body 22 to be folded upward, so as to reduce the storage space occupied by the carrycot. When the carrycot is to be unfolded for use, the first upper frame body 11 and the second upper frame body 12 are pulled, which will render the first lower frame body 21 and the second lower frame body 22 to be unfolded. Since the third lower frame body 23 is disposed between the first lower frame body 21 and the second lower frame body 22, the lower frame 2 is in a three-section-configuration after being folded. Of course, in other examples, the third lower frame body 23 itself may be in two sections or more such that the transition at the foldable part and/or bendable part is more fluent. The third lower frame body 23 will provide storage space between the first lower frame body 21 and the second lower frame body 22 in the folded state. On the one hand, after folding, the first lower frame body 21, the second lower frame body 22 and the third lower frame body 23 are parallel arranged in a U-shape-configuration, which occupies smaller space as compared with the two-section V-shaped frame. On the other hand, the canopy and the cloth cover soft component are unlikely to be damaged by compression and their flatness after folding can be improved. Furthermore, the first supporting rod 312 is fixedly connected to the third lower frame body 23. As a result, in the folded state, the tilting degrees of the first upper frame body 11, the second upper frame body 12, the first lower frame body 21 and the second lower frame body 22 are in consistent with the tilting degree of the first supporting rod 312 such that the carrycot can be tilted toward one side to fit the stroller frame, thereby facilitating the folding of the entire stroller. In addition, when the second upper frame body 12 is folded upward, a force is applied to the first foldable part and/or bendable part 13 to make it move downward. As the position of the rotation point of the first supporting rod 312 and the first upper frame body 11 is fixed, the second upper frame body 12 can be folded with only one hand and rendering the carrycot to be folded as a whole.

### Example 3

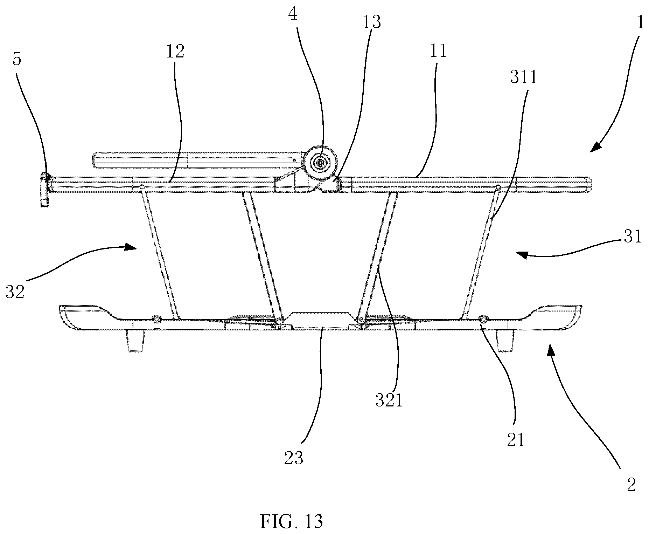

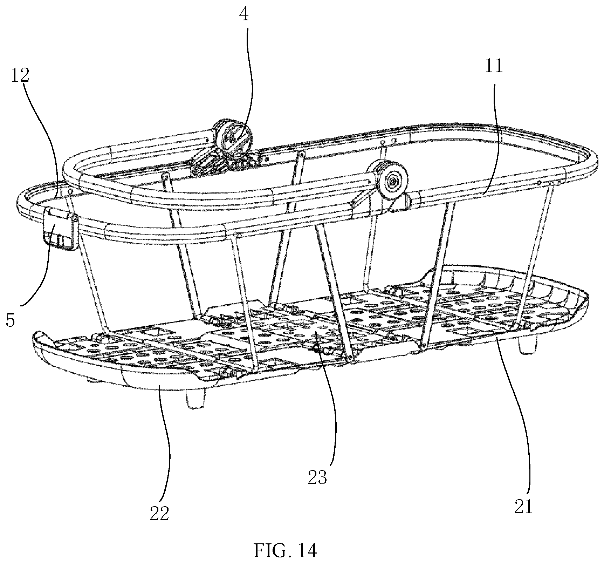

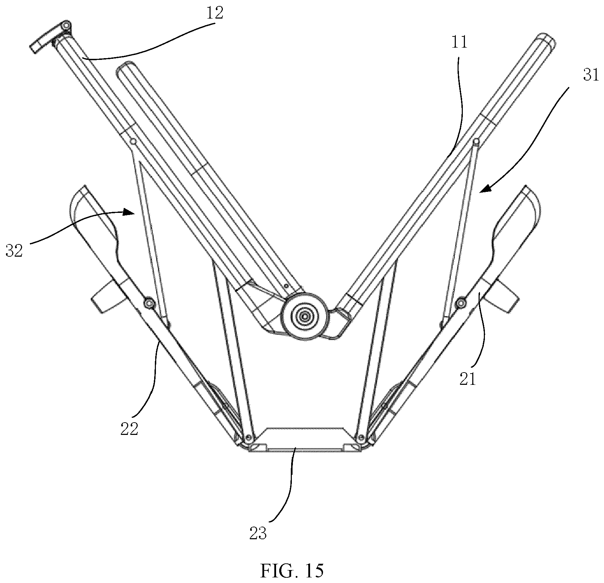

As shown in FIG. 13 to FIG. 15, Example 3 of the present application provides a collapsible carrycot comprising a first collapsible part 31 which includes a first connecting rod 311. One end of the first connecting rod 311 is rotatably connected to the intermediate part of the first upper frame body 11, and the other end of the first connecting rod 311 is rotatably connected to the first lower frame body 21.

In this embodiment, one end of the first connecting rod 311 is connected to the intermediate part of the first frame body 11. The upper frame 1 and the lower frame 2 have uniform force bearing points, and thus are unlikely to deform. The first collapsible part 31 is in linkage with the folding motion of the first upper frame body 11 and the first lower frame body 21 via the first connecting rod 311 disposed between the first upper frame body 11 and the first lower frame body 21, leading to a simple structure and low manufacturing cost.

As a preferred embodiment, the first collapsible part 31 further includes a third 321. One end of the second connecting rod 321 is rotatably connected to the first upper frame body 11, and the other end of the second connecting rod 321 is rotatably connected to the connection point between the first lower frame body 21 and the third lower frame body 23.

In this embodiment, the other end of the second connecting rod 321 is rotatably connected to the connection point between the first lower frame body 21 and the third lower frame body 23. The first collapsible part 31 connects to the upper frame 1 and the lower frame 2 at discrete locations to achieve an even distribution of force, and the structure is more stable and reliable, and is unlikely to deform.

As a preferable embodiment, the second collapsible part 32 and the first collapsible part 31 are symmetrically arranged.

In this embodiment, the second collapsible part 32 and the first collapsible part 31 are symmetrically arranged, thus the carrycot has a simple structure and low manufacturing cost.

This example further provides a child stroller comprising any one of the above collapsible carrycots.

In the carrycot of the child stroller of this example, the first upper frame body 11 and the second upper frame body 12 are connected via the first foldable part and/or bendable part 13, and can be separately folded upward around the connection points thereof to the first foldable part and/or bendable part 13 as the rotation points. Besides, the first lower frame body 21 and the second lower frame body 22 can also be foldable toward each other around the connection points thereof to the third lower frame body 23 as the rotation points. In addition, the first collapsible part 31 is disposed between the first upper frame body 11 and the first lower frame body 21, and the second collapsible part 32 is disposed between the second upper frame body 12 and the second lower frame body 22. When the first upper frame body 11 is folded upward around a rotation point which is the connection point to the first foldable part and/or bendable part 13, the first collapsible part 31 will drive the first lower frame body 21 to be folded upward around a rotation point which is the connection point to the third lower frame body 23. Similarly, when the second upper frame body 12 is folded upward, the second lower frame body 22 will also be driven to fold upward, so as to reduce the storage space occupied by the carrycot. When the carrycot is to be unfolded for use, the first upper frame body 11 and the second upper frame body 12 are pulled, which will also drive the first lower frame body 21 and the second lower frame body 22 to be unfolded. Since the third lower frame body 23 is disposed between the first lower frame body 21 and the second lower frame body 22, the lower frame 2 is in a three-section-configuration after being folded. Of course, in other examples, the third lower frame body 23 itself may be in two sections or more such that the transition at the foldable part and/or bendable part is more fluent. The third lower frame body 23 will provide storage space between the first lower frame body 21 and the second lower frame body 22 in the folded state. On one hand, after folding, the first lower frame body 21, the second lower frame body 22 and the third lower frame body 23 are arranged in a U-shape configuration, which occupies smaller space than the two-section V-shaped frame. On the other hand, the canopy and the cloth cover soft component are unlikely to be damaged by compression and their flatness after folding can be improved.

### Example 4

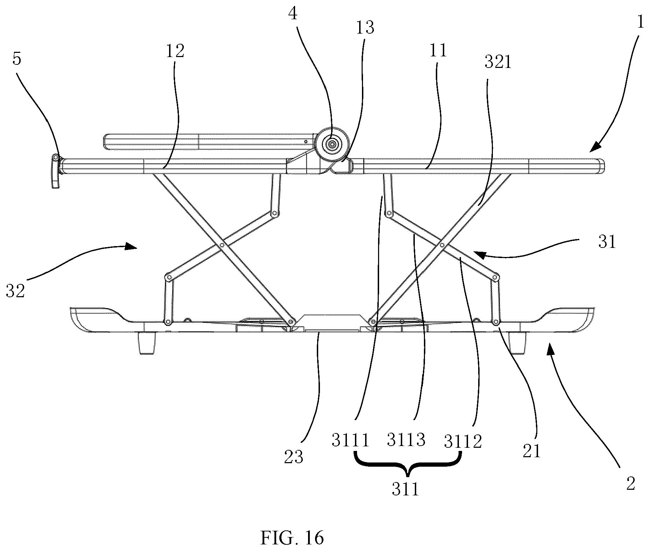

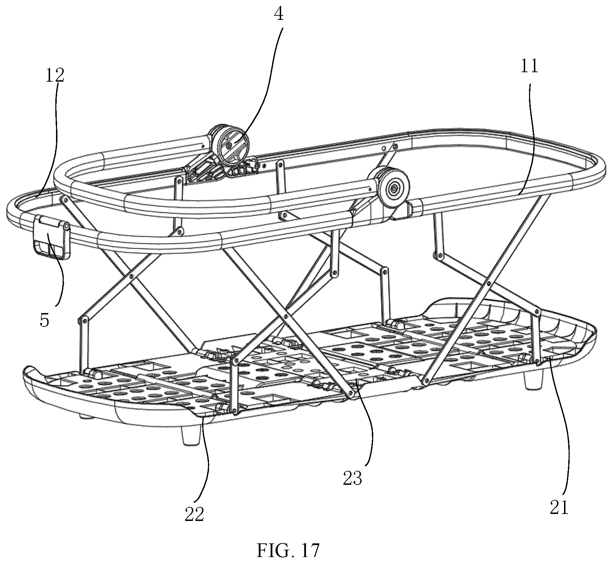

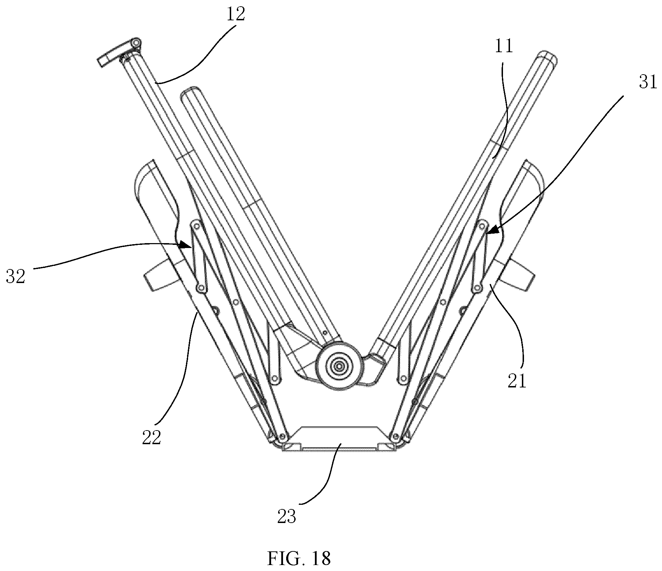

As shown in FIG. 16 to FIG. 18, Example 4 of the present application provides a collapsible carrycot comprising a first collapsible part 31 which includes a first connecting rod 311 and a second supporting rod 321. One end of the second connecting rod 321 is rotatably connected to the intermediate part of the first upper frame body 11. The other end of the second connecting rod 321 is rotatably connected to the connection point between the first lower frame body 21 and the third lower frame body 23. The first connecting rod 311 comprises a first sub-rod 3111, a second sub-rod 3112, and a third sub-rod 3113. The intermediate part of the third sub-rod 3113 is rotatably connected to the intermediate part of the second support rod 321. One end of the third sub-rod 3113 is rotatably connected to one end of the first sub-rod 3111. The other end of the third sub-rod 3113 is rotatably connected to one end of the second sub-rod 3112. The other end of the first sub-rod 3111 is rotatably connected to a position of the first upper frame body 11 proximal to the first foldable part and/or bendable part 13. The other end of the second sub-rod 3112 is rotatably connected to a position of the first lower frame body 21 distal to the third lower frame body 23.

In this embodiment, both ends of the second connecting rod 321 are rotatably connected to the intermediate part of the first upper frame body 11 and the connection point between the first lower frame body 21 and the third lower frame body 23, respectively. When the first upper frame body 11 is being folded upward, the second connecting rod 321 is driven to rotate around a rotation point which is the connection point between the first lower frame body 21 and the third lower frame body 23. In addition, the intermediate part of the third sub-rod 3113 is rotatably connected to the intermediate part of the second connecting rod 321. Rotation of the second connecting rod 321 drives the third sub-rod 3113 to rotate around the connection point between the third sub-rod 3113 and the second connecting rod 321. As the third sub-rod 3113 is rotatably connected to the first sub-rod 3111 and the second sub-rod 3112, the first sub-rod 3111 is rotatably connected to the first upper frame body 11, and the second sub-rod 3112 is rotatably connected to the first lower frame body 21, the rotation of the third sub-rod 3113 will pull the second sub-rod 3112 and drive the first lower frame body 21 to be folded upward. In the above structure, the first collapsible part is in a cross X shape and the force-bearing positions of the connection points with the first upper frame body 11 and the first lower frame body 21 are dispersed uniformly. Therefore, the structure is more stable and reliable.

As a preferable embodiment, the second collapsible part 32 and the first collapsible part 31 are symmetrically arranged.

The second collapsible part 32 and the first collapsible part 31 are symmetrically arranged. The carrycot has a simple structure and low manufacturing cost. Of course, in other examples, the second collapsible part 32 may be configured according to Example 3 to form an asymmetric configuration.

This example further provides a child stroller comprising the collapsible carrycot as described above.

Although the above describes specific embodiments of the present application, it is understood by those skilled in the art that the embodiments are merely for illustrative purposes, and the protection scope of the present invention is defined by the claims that follow. Various modifications and variations can be made to the embodiments by those skilled in the art without departing from the principle and essence of the present application, although the modifications and variations fall within the protection scope of the present invention.

## Claims

1. A collapsible carrycot comprising an upper frame (1), a lower frame (2) and a collapsible assembly, wherein:
the upper frame (1) comprises a first upper frame body (11), a second upper frame body (12) and a first bendable and/or foldable part (13), the first upper frame body (11) and the second upper frame body (12) are connected via the first bendable and/or foldable part (13), and each of the first upper frame body (11) and the second upper frame body (12) is separately foldable toward each other around the connection points thereof to the first bendable and/or foldable part (13) as the rotation points;
the lower frame (2) comprises a first lower frame body (21), a second lower frame body (22) and a third lower frame body (23), the first lower frame body (21) is rotatably connected to one end of the third lower frame body (23), the second lower frame body (22) is rotatably connected to the other end of the third lower frame body (23), and each of the first lower frame body (21) and the second lower frame body (22) is separately foldable toward each other around the connection points thereof to the third lower frame body (23) as the rotation points;
wherein the collapsible assembly includes a first collapsible part (31) between the first upper frame body (11) and the first lower frame body (21), and a second collapsible part (32) between the second upper frame body (12) and the second lower frame body (22), wherein when the first upper frame body (11) and the second upper frame body (12) are folded toward each other, the first lower frame body (21) and the second lower frame body (22) are driven to be folded toward each other by the first collapsible part (31) and the second collapsible part (32);
**characterized in that** the first collapsible part (31) includes a first connecting rod (311) and a first supporting rod (312), wherein one end of the first connecting rod (311) is rotatably connected to the first upper frame body (11), and the other end of the first connecting rod (311) is rotatably connected to the first lower frame body (21), wherein one end of the first supporting rod (312) is rotatably connected to the first upper frame body (11), and the other end of the first supporting rod (312) is fixedly connected to the third lower frame body (23).

2. The collapsible carrycot according to claim 1, **characterized in that** the collapsible carrycot further includes a locking mechanism device (4), wherein the locking mechanism device (4) is configured to lock the first bendable and/or foldable part (13) such that the first upper frame body (11) and the second upper frame body (12), and the first lower frame body (21) and the second lower frame body (22) cannot be folded.

3. The collapsible carrycot according to claim 2, **characterized in that** the upper frame (1) is provided with an unlocking mechanism device (5), wherein the unlocking mechanism device (5) is configured to unlock the locking mechanism device (4).

4. The collapsible carrycot according to claim 1, **characterized in that** the position where the first supporting rod (312) is rotatably connected to the first upper frame body (11) is between the first bendable and/or foldable part (13) and the position where the first connecting rod (311) is rotatably connected to the first upper frame body (11), and wherein the first connecting rod (311) is rotatably connected to the first lower frame body (21).

5. The collapsible carrycot according to claim 4, **characterized in that** the second collapsible part (32) includes a second connecting rod (321), wherein one end of the second connecting rod (321) is rotatably connected to the second upper frame body (12), and the other end of the second connecting rod (321) is rotatably connected to the second lower frame body (22).

6. The collapsible carrycot according to any one of claims 1 to 5, **characterized in that** the first supporting rod (312) is configured such that it does not deform during the folding of the collapsible carrycot, nor does the first supporting rod (312) slide relative to the first upper frame body (11); and wherein the first connecting rod (311) is configured such that it does not deform during folding or unfolding, and the first connecting rod (311) does not slide relative to the first upper frame body (11) and/or the first lower frame body (21).

7. The collapsible carrycot according to claim 1, **characterized in that** the first connecting rod (311) comprises a first sub-rod (3111), a second sub-rod (3112), and a third sub-rod (3113), wherein the intermediate part of the third sub-rod (3113) is rotatably connected to the intermediate part of the first supporting rod (312), wherein one end of the third sub-rod (3113) is rotatably connected to one end of the first sub-rod (3111), and the other end of the third sub-rod (3113) is rotatably connected to one end of the second sub-rod (3112), wherein the other end of the first sub-rod (3111) is rotatably connected to a position of the first upper frame body (11), which is proximal to the first bendable and/or foldable part (13), wherein the other end of the second sub-rod (3112) is rotatably connected to a position of the first lower frame body (21), which is distal to the third lower frame body (23);
wherein the second collapsible part (32) includes a second connecting rod (321), wherein one end of the second connecting rod (321) is rotatably connected to the second upper frame body (12), and the other end of the second connecting rod (321) is rotatably connected to the second lower frame body (22).

8. The collapsible carrycot according to any one of claims 1 to 7, **characterized in that** the second collapsible part (32) further includes a third connecting rod (322), wherein one end of the third connecting rod (322) is rotatably connected to the second upper frame body (12), and the other end of the third connecting rod (322) is rotatably connected to the connection point between the second lower frame body (22) and the third lower frame body (23).

9. A child stroller comprising the collapsible carrycot according to any one of claims 1 to 8.

## Patentansprüche

1. Zusammenklappbare Babytrage, umfassend einen oberen Rahmen (1), einen unteren Rahmen (2) und eine zusammenklappbare Baugruppe, wobei:
der obere Rahmen (1) einen ersten oberen Rahmenkörper (11), einen zweiten oberen Rahmenkörper (12) und einen ersten knickbaren und/oder faltbaren Teil (13) umfasst,
der erste obere Rahmenkörper (11) und der zweite obere Rahmenkörper (12) über den ersten knickbaren und/oder faltbaren Teil (13) verbunden sind und jeder des ersten oberen Rahmenkörpers (11) und des zweiten oberen Rahmenkörpers (12) separat zueinander um die Verbindungspunkte davon mit dem ersten knickbaren und/oder faltbaren Teil (13) als Drehpunkte faltbar ist;
der untere Rahmen (2) einen ersten unteren Rahmenkörper (21), einen zweiten unteren Rahmenkörper (22) und einen dritten unteren Rahmenkörper (23) umfasst, der erste untere Rahmenkörper (21) drehbar mit einem Ende des dritten unteren Rahmenkörpers (23) verbunden ist, der zweite untere Rahmenkörper (22) drehbar mit dem anderen Ende des dritten unteren Rahmenkörpers (23) verbunden ist und jeder des ersten unteren Rahmenkörpers (21) und des zweiten unteren Rahmenkörpers (22) separat zueinander um die Verbindungspunkte davon mit dem dritten unteren Rahmenkörper (23) als Drehpunkte faltbar ist;
wobei die zusammenklappbare Baugruppe einen ersten zusammenklappbaren Teil (31) zwischen dem ersten oberen Rahmenkörper (11) und dem ersten unteren Rahmenkörper (21) und einen zweiten zusammenklappbaren Teil (32) zwischen dem zweiten oberen Rahmenkörper (12) und dem zweiten unteren Rahmenkörper (22) umfasst,
wobei, wenn der erste obere Rahmenkörper (11) und der zweite obere Rahmenkörper (12) zueinander gefaltet sind, der erste untere Rahmenkörper (21) und der zweite untere Rahmenkörper (22) angetrieben werden, um durch den ersten zusammenklappbaren Teil (31) und den zweiten zusammenklappbaren Teil (32) zueinander gefaltet zu werden;
**dadurch gekennzeichnet, dass** der erste zusammenklappbare Teil (31) eine erste Verbindungsstange (311) und eine erste Stützstange (312) umfasst, wobei ein Ende der ersten Verbindungsstange (311) drehbar mit dem ersten oberen Rahmenkörper (11) verbunden ist und das andere Ende der ersten Verbindungsstange (311) drehbar mit dem ersten unteren Rahmenkörper (21) verbunden ist,
wobei ein Ende der ersten Stützstange (312) drehbar mit dem ersten oberen Rahmenkörper (11) verbunden ist und das andere Ende der ersten Stützstange (312) fest mit dem dritten unteren Rahmenkörper (23) verbunden ist.

2. Zusammenklappbare Babytrage gemäß Anspruch 1, **dadurch gekennzeichnet, dass** die zusammenklappbare Babytrage ferner eine Verriegelungsmechanismusvorrichtung (4) umfasst, wobei die Verriegelungsmechanismusvorrichtung (4) konfiguriert ist, um den ersten knickbaren und/oder faltbaren Teil (13) zu verriegeln,
so dass der erste obere Rahmenkörper (11) und der zweite obere Rahmenkörper (12) und der erste untere Rahmenkörper (21) und der zweite untere Rahmenkörper (22) nicht gefaltet werden können.

3. Zusammenklappbare Babytrage gemäß Anspruch 2, **dadurch gekennzeichnet, dass** der obere Rahmen (1) mit einer Entriegelungsmechanismusvorrichtung (5) versehen ist,
wobei die Entriegelungsmechanismusvorrichtung (5) konfiguriert ist, um die Verriegelungsmechanismusvorrichtung (4) zu entriegeln.

4. Zusammenklappbare Babytrage gemäß Anspruch 1, **dadurch gekennzeichnet, dass** die Position, in der die erste Stützstange (312) drehbar mit dem ersten oberen Rahmenkörper (11) verbunden ist, zwischen dem ersten knickbaren und/oder faltbaren Teil (13) und der Position ist, in der die erste Verbindungsstange (311) drehbar mit dem ersten oberen Rahmenkörper (11) verbunden ist, und
wobei die erste Verbindungsstange (311) drehbar mit dem ersten unteren Rahmenkörper (21) verbunden ist.

5. Zusammenklappbare Babytrage gemäß Anspruch 4, **dadurch gekennzeichnet, dass** der zweite zusammenklappbare Teil (32) eine zweite Verbindungsstange (321) umfasst,
wobei ein Ende der zweiten Verbindungsstange (321) drehbar mit dem zweiten oberen Rahmenkörper (12) verbunden ist und das andere Ende der zweiten Verbindungsstange (321) drehbar mit dem zweiten unteren Rahmenkörper (22) verbunden ist.

6. Zusammenklappbare Babytrage gemäß irgend einem der Ansprüche 1 bis 5, **dadurch gekennzeichnet, dass** die erste Stützstange (312) so konfiguriert ist,
dass sie sich während des Faltens der zusammenklappbaren Babytrage nicht verformt, noch gleitet die erste Stützstange (312) relativ zu dem ersten oberen Rahmenkörper (11);
und wobei die erste Verbindungsstange (311) so konfiguriert ist,
dass sie sich während des Faltens oder Entfaltens nicht verformt, und die erste Verbindungsstange (311) nicht relativ zu dem ersten oberen Rahmenkörper (11) und/oder dem ersten unteren Rahmenkörper (21) gleitet.

7. Zusammenklappbare Babytrage gemäß Anspruch 1, **dadurch gekennzeichnet, dass** die erste Verbindungsstange (311) eine erste Unterstange (3111), eine zweite Unterstange (3112) und eine dritte Unterstange (3113) umfasst,
wobei der Zwischenteil der dritten Unterstange (3113) drehbar mit dem Zwischenteil der ersten Stützstange (312) verbunden ist,
wobei ein Ende der dritten Unterstange (3113) drehbar mit einem Ende der ersten Unterstange (3111) verbunden ist und das andere Ende der dritten Unterstange (3113) drehbar mit einem Ende der zweiten Unterstange (3112) verbunden ist, wobei das andere Ende der ersten Unterstange (3111) drehbar mit einer Position des ersten oberen Rahmenkörpers (11) verbunden ist, die proximal zu dem ersten knickbaren und/oder faltbaren Teil (13) ist,
wobei das andere Ende der zweiten Unterstange (3112) drehbar mit einer Position des ersten unteren Rahmenkörpers (21) verbunden ist, die distal zu dem dritten unteren Rahmenkörper (23) ist;
wobei der zweite zusammenklappbare Teil (32) eine zweite Verbindungsstange (321) umfasst, wobei ein Ende der zweiten Verbindungsstange (321) drehbar mit dem zweiten oberen Rahmenkörper (12) verbunden ist und das andere Ende der zweiten Verbindungsstange (321) drehbar mit dem zweiten unteren Rahmenkörper (22) verbunden ist.

8. Zusammenklappbare Babytrage gemäß irgend einem der Ansprüche 1 bis 7, **dadurch gekennzeichnet, dass** der zweite zusammenklappbare Teil (32) ferner eine dritte Verbindungsstange (322) umfasst,
wobei ein Ende der dritten Verbindungsstange (322) drehbar mit dem zweiten oberen Rahmenkörper (12) verbunden ist und das andere Ende der dritten Verbindungsstange (322) drehbar mit dem Verbindungspunkt zwischen dem zweiten unteren Rahmenkörper (22) und dem dritten unteren Rahmenkörper (23) verbunden ist.

9. Kinderwagen, der die zusammenklappbare Babytrage gemäß irgend einem der Ansprüche 1 bis 8 umfasst.

## Revendications

1. Couffin pliable comprenant un châssis supérieur (1), un châssis inférieur (2) et un assemblage pliable, où :
le châssis supérieur (1) comprend un premier corps de châssis supérieur (11), un deuxième corps de châssis supérieur (12) et une première partie courbable et/ou pliable (13), le premier corps de châssis supérieur (11) et le deuxième corps de châssis supérieur (12) sont connectés via la première partie courbable et/ou pliable (13), et chacun du premier corps de châssis supérieur (11) et du deuxième corps de châssis supérieur (12) est pliable séparément l'un vers l'autre autour de leurs points de connexion à la première partie courbable et/ou pliable (13) comme points de rotation ;
le châssis inférieur (2) comprend un premier corps de châssis inférieur (21), un deuxième corps de châssis inférieur (22) et un troisième corps de châssis inférieur (23), le premier corps de châssis inférieur (21) est connecté de manière rotative à une extrémité du troisième corps de châssis inférieur (23), le deuxième corps de châssis inférieur (22) est connecté de manière rotative à l'autre extrémité du troisième corps de châssis inférieur (23), et chacun du premier corps de châssis inférieur (21) et du deuxième corps de châssis inférieur (22) est pliable séparément l'un vers l'autre autour de leurs points de connexion au troisième corps de châssis inférieur (23) comme points de rotation ;
où l'assemblage pliable comprend une première partie pliable (31) entre le premier corps de châssis supérieur (11) et le premier corps de châssis inférieur (21), et une deuxième partie pliable (32) entre le deuxième corps de châssis supérieur (12) et le deuxième corps de châssis inférieur (22), où lorsque le premier corps de châssis supérieur (11) et le deuxième corps de châssis supérieur (12) sont pliés l'un vers l'autre, le premier corps de châssis inférieur (21) et le deuxième corps de châssis inférieur (22) sont entraînés pour être pliés l'un vers l'autre par la première partie pliable (31) et la deuxième partie pliable (32) ;
**caractérisé en ce que** la première partie pliable (31) comprend une première tige de connexion (311) et une première tige de support (312), où une extrémité de la première tige de connexion (311) est connectée de manière rotative au premier corps de châssis supérieur (11), et l'autre extrémité de la première tige de connexion (311) est connectée de manière rotative au premier corps de châssis inférieur (21), où une extrémité de la première tige de support (312) est connectée de manière rotative au premier corps de châssis supérieur (11), et l'autre extrémité de la première tige de support (312) est connectée de manière fixe au troisième corps de châssis inférieur (23).

2. Couffin pliable selon la revendication 1, **caractérisé en ce que** le couffin pliable comprend en outre un dispositif de mécanisme de verrouillage (4), où le dispositif de mécanisme de verrouillage (4) est configuré pour verrouiller la première partie courbable et/ou pliable (13) de telle sorte que le premier corps de châssis supérieur (11) et le deuxième corps de châssis supérieur (12), et le premier corps de châssis inférieur (21) et le deuxième corps de châssis inférieur (22) ne peuvent pas être pliés.

3. Couffin pliable selon la revendication 2, **caractérisé en ce que** le châssis supérieur (1) est pourvu d'un dispositif de mécanisme de déverrouillage (5), où le dispositif de mécanisme de déverrouillage (5) est configuré pour déverrouiller le dispositif de mécanisme de verrouillage (4).

4. Couffin pliable selon la revendication 1, **caractérisé en ce que** la position où la première tige de support (312) est connectée de manière rotative au premier corps de châssis supérieur (11) est entre la première partie courbable et/ou pliable (13) et la position où la première tige de connexion (311) est connectée de manière rotative au premier corps de châssis supérieur (11), et où la première tige de connexion (311) est connectée de manière rotative au premier corps de châssis inférieur (21).

5. Couffin pliable selon la revendication 4, **caractérisé en ce que** la deuxième partie pliable (32) comprend une deuxième tige de connexion (321), où une extrémité de la deuxième tige de connexion (321) est connectée de manière rotative au deuxième corps de châssis supérieur (12), et l'autre extrémité de la deuxième tige de connexion (321) est connectée de manière rotative au deuxième corps de châssis inférieur (22).

6. Couffin pliable selon l'une quelconque des revendications 1 à 5, **caractérisé en ce que** la première tige de support (312) est configurée de telle sorte qu'elle ne se déforme pas pendant le pliage du couffin pliable, ni la première tige de support (312) ne coulisse par rapport au premier corps de châssis supérieur (11) ; et où la première tige de connexion (311) est configurée de telle sorte qu'elle ne se déforme pas pendant le pliage ou le dépliage, et la première tige de connexion (311) ne coulisse pas par rapport au premier corps de châssis supérieur (11) et/ou au premier corps de châssis inférieur (21).

7. Couffin pliable selon la revendication 1, **caractérisé en ce que** la première tige de connexion (311) comprend une première sous-tige (3111), une deuxième sous-tige (3112), et une troisième sous-tige (3113), où la partie intermédiaire de la troisième sous-tige (3113) est connectée de manière rotative à la partie intermédiaire de la première tige de support (312), où une extrémité de la troisième sous-tige (3113) est connectée de manière rotative à une extrémité de la première sous-tige (3111), et l'autre extrémité de la troisième sous-tige (3113) est connectée de manière rotative à une extrémité de la deuxième sous-tige (3112), où l'autre extrémité de la première sous-tige (3111) est connectée de manière rotative à une position du premier corps de châssis supérieur (11), qui est proximale à la première partie courbable et/ou pliable (13), où l'autre extrémité de la deuxième sous-tige (3112) est connectée de manière rotative à une position du premier corps de châssis inférieur (21), qui est distale au troisième corps de châssis inférieur (23) ;
où la deuxième partie pliable (32) comprend une deuxième tige de connexion (321), où une extrémité de la deuxième tige de connexion (321) est connectée de manière rotative au deuxième corps de châssis supérieur (12), et l'autre extrémité de la deuxième tige de connexion (321) est connectée de manière rotative au deuxième corps de châssis inférieur (22).

8. Couffin pliable selon l'une quelconque des revendications 1 à 7, **caractérisé en ce que** la deuxième partie pliable (32) comprend en outre une troisième tige de connexion (322), où une extrémité de la troisième tige de connexion (322) est connectée de manière rotative au deuxième corps de châssis supérieur (12), et l'autre extrémité de la troisième tige de connexion (322) est connectée de manière rotative au point de connexion entre le deuxième corps de châssis inférieur (22) et le troisième corps de châssis inférieur (23).

9. Poussette pour enfants comprenant le couffin pliable selon l'une quelconque des revendications 1 à 8.
